# EUROPÄISCHE PATENTSCHRIFT

(11) **EP 0 526 751 B1**
(45) Veröffentlichungstag und Bekanntmachung des Hinweises auf die Patenterteilung: **23.10.1996**
(21) Anmeldenummer: 92111617.4
(22) Anmeldetag: 09.07.1992
(51) Int. Cl.: H04M 1/02

(54) **Bedieneinheit für ein Funktelefon**
Control unit for a radio-telephone
Unité de commande pour un radiotéléphone

(30) Priorität: 07.08.1991 DE 9109804 U
(43) Veröffentlichungstag der Anmeldung: 10.02.1993
(73) Patentinhaber: SIEMENS AKTIENGESELLSCHAFT, 80333 München (DE)
(72) Erfinder: Kiesewetter, Reinhold, W-8056 Neufahrn (DE); Bader, Harald, Dipl.-Ing., W-8000 München 5 (DE)

(56) Entgegenhaltungen:
- DE-A- 3 144 535
- DE-A- 3 207 051
- DE-A- 3 408 176
- TELCOM REPORT Nr. 9, 1986, MUNCHEN DE Seiten 319 - 325 G. KOCH, G. NOTHNAGEL, H. THOMFOHRDE 'Technische und konstruktive Gesichtspunkte bei der Gestaltung von Mobilstationen'

## Beschreibung

Die Erfindung bezieht sich auf eine Bedieneinheit für ein Funktelefon, das mit einem Tastenfeld für die Wählfunktionen und einem zugehörigen Anzeigefeld in Form eines LCD-Displays ausgestattet ist.

Eine derartige Bedieneinheit ist z.B. aus der DE-A-3 144 535 bekannt. Diese bekannte Bedieneinheit für ein Funktelefon weist ebenfalls ein Tastfeld für die Wählfunktion und ein zugehöriges Anzeigefeld in Form eines LCD-Displays auf.

Solche Bedieneinheiten für Funktelefone, insbesondere Autotelefone, werden aufgrund der integrierten Technik in immer kleineren Dimensionen erstellt.

Der Erfindung liegt die Aufgabe zugrunde, unter diesen gegebenen Umständen eine möglichst einfache Anordnung zur Halterung und Kontaktierung des Displays anzugeben.

Diese Aufgabe wird gemäß der Erfindung dadurch gelöst, daß das Display in einen Ausschnitt des Gehäuseoberteils eingelegt ist und darin einerseits durch einen angegossenen, in eine Ausnehmung des Ausschnitts eingreifenden Zapfen gehalten ist und andererseits mittels einer U-förmigen Feder verspannt ist, deren Mittelsteg am Gehäuse anliegt, während die zum Gehäuse hin eingerollten Schenkel der Feder am Display anliegen, daß in das Gehäuseoberteil eine Leiterplatte eingelegt ist, die an den Längskanten die Leitgummis für das Display trägt und in sich selbst als lichterzeugendes flächiges Element ausgebildet ist, und daß das Display auf der inneren Seite an den Längskanten, gegenüber den Leitgummis zurückversetzt, eine lichtleitende Schicht trägt.

Weitere vorteilhafte Einzelheiten der Erfindung sind in den Unteransprüchen aufgezeigt.

Nachstehend wird die Erfindung anhand eines in den Figuren gezeigten Ausführungsbeispieles näher erläutert.
- Die Figur 1: zeigt in Explosivdarstellung das Gehäuseoberteil der Bedieneinheit, das LCD-Display und die darüber angeordnete Leiterplatte.
- Die Figur 2: zeigt einen Ausschnitt zur Darstellung der Haltefeder für das Display.
- Die Figur 3: zeigt die Feder im einzelnen.

In den Figuren sind lediglich die wichtigsten Elemente für den Erfindungsgegenstand dargestellt. Mit 1 ist dabei der Teil des Gehäuseoberteils mit Tastenfeld für die Bedieneinheit bezeichnet. In diesem Gehäuseoberteil ist oberhalb des Tastenfeldes ein Gehäuseausschnitt 11 vorgesehen, der mit einer eingegossenen durchsichtigen Kunststoffscheibe nach außen hin abgedeckt ist. Die Abdeckung dient zum Schutz des in den Ausschnitt 11 eingelegten LCD-Displays 2. Zur Halterung dieses Displays dient auf der einen Seite ein angegossener Zapfen 12, der in eine entsprechende nutenförmige Ausnehmung im Gehäuseausschnitt eingreift. Auf der anderen Seite (vorzugsweise Schmalseite) wird das Display durch eine U-förmige Haltefeder 3, die den Zapfen 12 in die nutenförmige Ausnehmung drückt, gehalten. Das Display ist auf diese Weise sehr einfach zu montieren, da es praktisch nur eingeschnappt zu werden braucht.

Die Haltefeder hat im Grunde genommen eine U-Form, wobei der Mittelteil in eine am betreffenden Rand des Gehäuseausschnitts angegossene rillenförmige Halterung 10 eingelegt ist. Die Feder ist dort leicht durchgebogen, so daß sie in der Rille von sich aus festgehalten wird. Die Enden 9 der U-förmigen Feder sind nach außen hin eingerollt. Das LCD-Display wird über Leitgummis 6 angesteuert, die sich auf einer Leiterplatte 4 in einem fassungähnlichen Gebilde 5 an den Längsrändern befinden. Die Leitgummis 6 werden über einen für die Leiterplatte 4 hindurchkontaktierten IC 13 gespeist. Die Leiterplatte 4 wird bei der Montage über Führungsstücke 7 auf das Gehäuseobeteil gelegt und mittels Schrauben 8 mit diesem verbunden.

Um das Display bei Dunkelheit lesen zu können, ist es mit einer lichtleitenden, gegen die Leitgummiränder des Displays abgesetzten Schicht 14 versehen. Diese lichtleitende Schicht liegt letztendlich an der sich zwischen den Leitgummis befindlichen Platte 5 an, die selbst als lichterzeugende (phosphorreszierende) Platte ausgebildet ist.

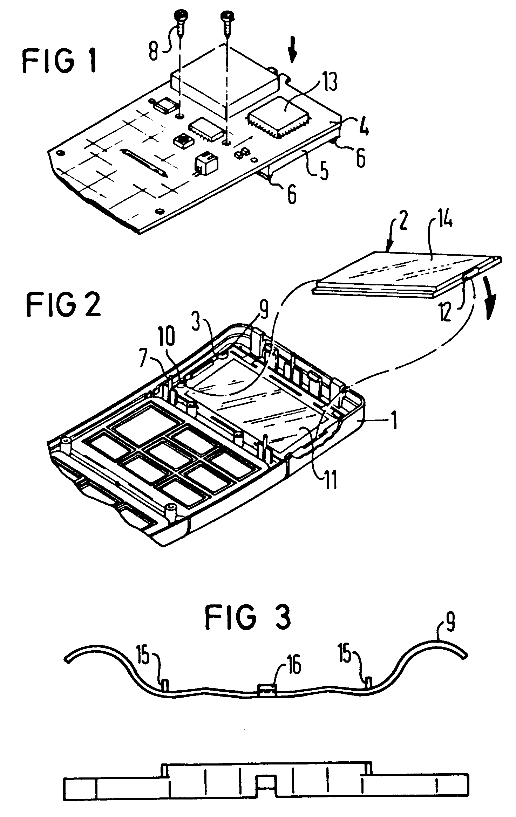

Die Feder samt Halterung ist im einzelnen in der Figur 2 hervorgehoben. Die gesamte Einheit ist nicht nur einfach zu montieren sondern bildet auf engstem Raum eine zuverlässig funktionierende Anzeigevorrichtung.

In Figur 3 ist die Feder samt Kurvenverlauf ersichtlich. An den Enden der rillenförmigen Halterung 10 ist die Feder nach unten hin mit Ausklinkungen 15 versehen, so daß sie in Querrichtung lagebestimmt ist. Nach oben hin hat die Feder mittig eine kleine zapfenförmige Ausklinkung 16, die ebenfalls der Lagestabilisierung dient.

## Patentansprüche

1. Bedieneinheit für ein Funktelefon, das mit einem Tastenfeld für die Wählfunktionen und einem zugehörigen Anzeigefeld in Form eines LCD-Displays (2) ausgestattet ist,
**dadurch gekennzeichnet**,
daß das Display (2) in einen Ausschnitt (11) des Gehäuseoberteils (1) eingelegt ist und darin einerseits durch einen angegossenen, in eine Ausnehmung des Ausschnitts eingreifenden Zapfen (12) gehalten ist und andererseits mittels einer U-förmigen Feder (3) verspannt ist, deren Mittelsteg am Gehäuse anliegt, während die zum Gehäuse hin eingerollten Schenkel der Feder am Display anliegen, daß in das Gehäuseoberteil eine Leiterplatte (4) eingelegt ist, die an den Längskanten Leitgummis (6) für das Display trägt und in sich selbst als lichterzeugendes flächiges Element (5) ausgebildet ist, und daß das Display auf der inneren Seite an den Längskanten Leitgummis aufweist und zwischen den Leitgummis, zurückversetzt, eine lichtleitende Schicht (14) trägt.

2. Bedieneinheit nach Anspruch 1,
**dadurch gekennzeichnet**,
daß die Halterung der Feder durch eine einseitig am Gehäuseoberteil angegossene rillenförmige Halterung (10) erfolgt.

3. Bedieneinheit nach einem der vorhergehenden Ansprüche,
**dadurch gekennzeichnet**,
daß im Gehäuseausschnitt (11) für das Display ein durchsichtiges Kunststoffenster integriert ist.

4. Bedieneinheit nach einem der vorhergehenden Ansprüche,
**dadurch gekennzeichnet**,
daß sich auf der anderen Seite der Leiterplatte durchkontaktiert ein Ansteuer-IC (13) für das Display befindet.

## Claims

1. Control unit for a radio-telephone which is equipped with a keypad for the dialling functions and an associated display panel in the form of an LCD display (2), characterized in that the display (2) is inserted into a cut-out (11) in the upper part (1) of the housing and is held in it on the one hand by a moulded-on pin (12) which engages in a recess of the cut-out and on the other hand is clamped by means of a U-shaped spring (3) whose central web bears against the housing while the legs of the spring which are rolled in towards the housing bear against the display, in that a printed circuit board (4) which is fitted with guiding rubber strips (6) on the longitudinal edges for the display and is constructed in itself as a light-generating, planar element (5) is inserted into the upper part of the housing, and in that the display has guiding rubber strips on the longitudinal edges on the inside and is fitted with a light-guiding layer (14) which is set back between the guiding rubber strips.

2. Control unit according to Claim 1, characterized in that the spring is secured by means of a groove-shaped securing element (10) which is moulded onto the upper part of the housing on one side.

3. Control unit according to one of the preceding claims, characterized in that a transparent plastic window is integrated into the cut-out (11) of the housing for the display.

4. Control unit according to one of the preceding claims, characterized in that there is a drive IC (13) for the display, with through-contacts on the other side of the printed circuit board.

## Revendications

1. Unité de commande pour un téléphone mobile, qui est équipé d'un clavier pour les fonctions de sélection et d'une zone d'affichage associée sous forme d'un écran LCD (2),
caractérisée en ce que
l'écran (2) est inséré dans une découpe (11) de la partie supérieure (1) du boîtier, d'une part y est maintenu par un tenon (12) venu de matière et s'engageant dans une mortaise de la découpe et d'autre part y est bloqué au moyen d'un ressort en forme de U, dont la branche médiane est appliquée au boîtier, tandis que la branche, cintrée en direction du boîtier, du ressort est appliquée à l'écran, il est inséré dans la partie supérieure du boîtier une carte (4) à circuits imprimés, qui porte, sur les bords longitudinaux, des caoutchoucs (6) conducteurs pour l'écran et qui est en soi sous forme d'élément (5) surfacique photogène, et l'écran comporte, du côté intérieur, sur les bords longitudinaux, des caoutchoucs conducteurs et porte, en retrait entre les caoutchoucs conducteurs, une couche (14) guidant la lumière.

2. Unité de commande suivant la revendication 1,
caractérisée en ce que
la fixation du ressort est effectuée par une fixation (10) en forme de rainure, venue de matière d'un côté avec la partie supérieure du boîtier.

3. Unité de commande suivant l'une des revendications précédentes,
caractérisée en ce que
une fenêtre en matière plastique transparente à la lumière est intégrée à la découpe (11) du boîtier pour l'écran.

4. Unité de commande suivant l'une des revendications précédentes,
caractérisée en ce que
un circuit intégré (13) de commande de l'écran se trouve de l'autre côté de la carte à circuits imprimés en établissant le contact au travers de celle-ci.
